# EUROPEAN PATENT APPLICATION

(11) **EP 0 940 076 A1**
(43) Date of publication of application: **08.09.1999**
(21) Application number: 99200670.0
(22) Date of filing: 08.03.1999
(51) Int. Cl.: A01K 11/00

(54) **Animal identification device**

(30) Priority: 06.03.1998 NL 1008512
(71) Applicant: N.V. Nederlandsche Apparatenfabriek NEDAP, NL-7141 DE Groenlo (NL)
(72) Inventor: Zents, Otto Theodorus Jozef, 7131 ES Lichtenvoorde (NL)
(74) Representative: Ottevangers, Sietse Ulbe

(57) **Abstract**

The device for identification of an animal is for instance suitable for incorporation into the stomach of the animal or subcutaneously in the animal. The device comprises a housing and a transponder included in the housing, in which transponder an identification code is stored which can be read out by means of an electromagnetic field. The device further comprises a glass housing which is at least partially filled with a filling material, the transponder being embedded in the filling material. A portion of the filling material that is visible through the glass housing is provided with at least one sign visible from the outside of the glass housing.

## Description

The invention relates to a device for identification of an animal, the device being suitable for incorporation into, for instance, the stomach of the animal or subcutaneously in the animal, and the device comprising a housing which is at least partially of transparent design, a transponder accommodated in the housing and storing an identification code that can be read out by means of an electromagnetic field, and a filling material with which the housing is at least partially filled, the transponder being at least partially embedded in the filling material and the device further comprising at least one sign which is visibly provided.

The device also relates to a method for providing a sign on a device adapted for being incorporated into an animal for an identification of the animal, the device comprising a housing and a transponder accommodated in the housing in which an identification code is stored that can be read out by means of an electromagnetic field, the housing being at least partially of transparent design.

Such device and method are known from international patent application WO 93/05648. This publication discloses an electronic bolus adapted for incorporation into the stomach of an animal.

In this known bolus, the at least one sign is visibly provided on a label on the inside of the housing. The advantage hereof is that the bolus can be identified when no device for reading out the transponder is present or when the transponder has broken down.

A drawback of the known device is that the signs on the label will fade after the passage of time, as a consequence of which they become poorly readable or unreadable.

The object of the invention is to overcome the drawbacks outlined. In accordance with the invention, the device is characterized in that a portion of the filling material which is visible through the housing is provided with the at least one sign, so that the at least one sign is visible from the outside of the housing.

Since the at least one sign is provided on the inside of the housing, on the filling material, this sign is properly resistant to aggressive substances from outside and will remain well-visible also after a long period. If the device has the shape of a bolus located in the stomach, the housing provides that the aggressive gastric juices cannot affect the sign. Also, it is not possible to remove and/or change the sign.

A further drawback of the known device is that the at least one sign must be provided before the housing is closed. Also, it is not possible to provide a new sign after the housing has been closed. In accordance with another aspect of the invention, these drawbacks are overcome as well.

To this end, the at least one sign is preferably provided through the housing on or in the filling material by means of a laser beam. Hence, it is possible to provide the at least one sign, which is generally a readable code or bar code, when the transponder has already been accommodated in the housing.

As filling material, a cement-like material such as polyurethane, polyethylene, epoxy resin and/or PVC can be used. The housing is preferably manufactured from an inert transparent material such as glass.

Accordingly, the method according to the invention is characterized in that by means of a laser beam generated outside the housing, the contents of the housing are provided with at least one sign visible from the outside of the housing.

Preferably, the device further comprises a metal weight and connecting means which mechanically interconnect the housing and the weight. In this manner, the device constitutes an electronic bolus capable of being introduced into the stomach of an animal. The metal weight then provides that the bolus remains present in the stomach.

The connecting means in particular consist of a tubular casing into which the housing is included, the tubular casing having a free end thereof provided with an opening closed off by the weight.

In accordance with a particular embodiment of the invention, the tubular casing has its outer side provided with at least one visible sign. This visible sign may be identical to the sign provided on the filling material in the housing. However, it is also conceivable that other, deviating signs be used.

In accordance with a further elaboration of the invention, the connecting means are of removable design. If, after an animal has for instance been slaughtered, the device is retrieved, the connecting means can be removed. Consequently, the housing is released again, so that the at least one sign can again be read. A further advantage is that the housing and the metal weight can be reused for being assembled, by means of new connecting means, into a new device. To this end, the weight and the housing are cleaned and disinfected. By means of the laser beam, at least one new sign can then be provided on the filling material. Also, the old, at least one sign can be "crossed out" by means of the laser. In particular, the connecting means, too, are designed so as to be suitable for reuse. To this end, the tubular casing may for instance be manufactured from stainless steel. The invention may also be designed as an implant.

The invention will now be specified with reference to the accompanying drawings. In these drawings:
Fig. 1a shows a first embodiment of a device according to the invention and a part of a second embodiment of a device according to invention as shown in Fig. 2;
Fig. 1b shows a weight of the second embodiment of the device according to the invention as shown in Fig. 2;
Fig. 1c shows connecting means of the second embodiment of the device according to the invention as shown in Fig. 2; and
Fig. 2 shows a second embodiment of a device according to the invention.

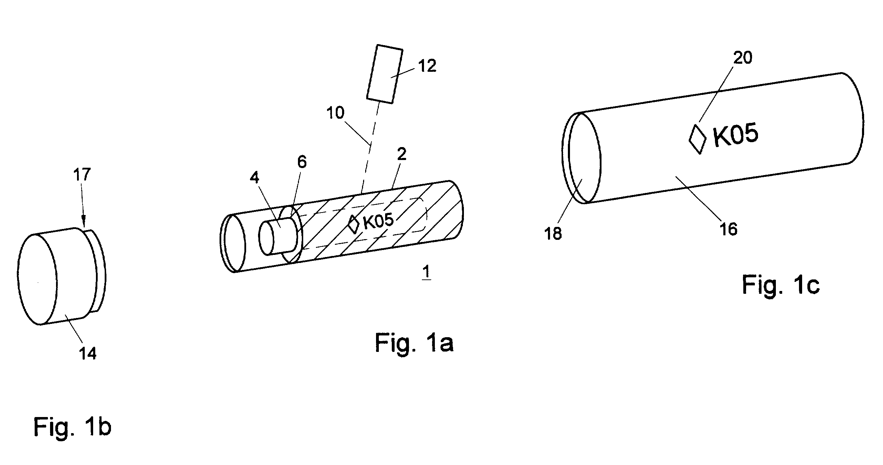

In Fig. 1a, reference numeral 1 designates a device for identification of an animal. The device is suitable for functioning, for instance, as an injected implant that can be provided subcutaneously in the animal. The device can also be used as a bolus capable of being introduced into a stomach of an animal. The device comprises a glass housing 2. Included into the glass housing 2 is a transponder 4 known per se. The transponder may be an active or passive transponder. Stored in the transponder 4 is an identification code which can be read out by means of an electromagnetic field.

The transponder is of a generally known type and may be designed as a passive or active transponder. In the latter case, the transponder may for instance be provided with a resonance circuit coupled to a microchip. When by means of a transceiver unit an electromagnetic field is transmitted having a frequency equal to the resonance frequency of the resonance circuit, the resonance circuit, when located in the electromagnetic field, will resonate. The resonance circuit then generates a voltage that is supplied to the microchip. In response thereto, the microchip generates an identification code which is supplied again to the resonance circuit. Thus, the interrogation field is modulated with the identification code. The transceiver unit generating the electromagnetic field may be designed to detect the modulation. Such a system is also referred to as an adsorption system. However, it is also known to use transmission systems.

The glass housing 2 is at least partially filled with a filling material 6. This filling material 6 may, for instance, consist of a cement-like substance such as polyurethane, polyethylene, epoxy resin and/or PVC. The transponder 4 is at least partially embedded in the filling material. A portion 5 of the transponder projects out of the filling material. The portion of the transponder that is located in the filling material is shown in dotted lines in Fig. la. Hence, the filling material here acts as a "cement" which holds the transponder in the housing in position.

As shown in Fig. 1a, a portion of the filling material which is visible through the glass housing has been provided with at least one sign 8 visible from an outer side of the glass housing. In this example, four signs have been provided. The first sign concerns a figure, while the following three signs are characters. Hence, in this application, "sign" is understood to mean, inter alia, characters such as numbers and letters. However, "sign" is also understood to mean a symbol, a figure, a bar code and the like.

As the signs are provided in the filling material and located under the glass, they remain properly visible, also when the device is exposed to aggressive chemicals. The signs remain properly visible also after a long time. A further advantage is that it is not possible to remove and/or change the sign in a simple manner. Hence, the device is adequately tamper-proof.

Preferably, the at least one sign is provided on the filling material by means of a laser beam 10 through the housing 2. The laser beam 10 can be generated by means of a laser 12 in a manner known per se.

The at least one sign 8 can be related to the identification code included in the transponder 4. However, it is also possible that there is no relationship between the sign and the identification code. The sign may for instance be a serial number of the transponder which is independent of the identification code stored in the transponder.

Preferably, the transponder 4 is of reprogrammable design for storing, by means of the electromagnetic field, a (new) identification code in the transponder. To this end, the transponder may for instance be provided with a memory for storing an identification code and with means for reading, by means of the electromagnetic field, the identification code stored in the memory and for writing, by means of the electromagnetic field, an identification code in the memory. Said means may comprises a microchip known per se and a resonance circuit coupled thereto, as discussed. However, a further specification of the transponder will not be given, as the transponder may consist of any type of transponder known per se.

As mentioned, the housing 2 of the device according to Fig. la may for instance be provided subcutaneously in an animal.

However, it is also possible that the device according to the invention is designed as a bolus. For this purpose, the device according to Fig. 1a may be internally weighted, for instance by incorporating, in addition to the filling material, a metal into the housing 2. It is also possible to incorporate other heavy materials into the filling material.

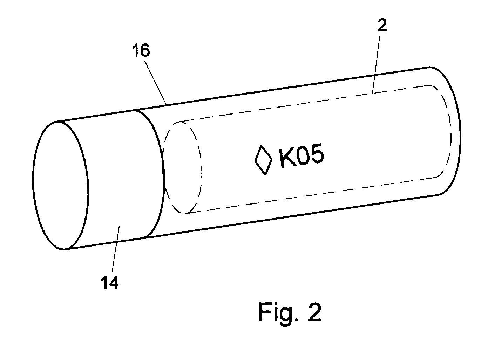

Fig. 2 shows a second embodiment of a device according to the invention in the form of a bolus composed of the housing 2 according to Fig. 1a, a metal weight 14 according to Fig. 1b and connecting means 16 according to Fig. 1c. In this example, the connecting means 16 consist of a tubular casing 16 accommodating the housing 2. The tubular casing 16 has a free end thereof provided with an opening 18 that is closed off by the weight 14. In this example, the tubular casing and the housing 2 are of cylindrical design and have the same diameter. The weight 14 has a slightly reduced diameter adjacent a free end thereof and may be manufactured from, for instance, stainless steel. This portion with the reduced diameter can be slid into the tubular casing 16 via the opening 18. The tubular casing and the weight 14 are preferably thus interconnected via a snap connection.

The tubular casing 16 may for instance be manufactured from a synthetic material such as plastic. Further, it is possible that the tubular casing 16 has its outer side further provided with at least one visible sign 20. This visible sign 20 may correspond to the at least one sign 8. However, it may also be a different sign. Preferably, the at least one sign 20 is formed by a relief in the outer side of the tubular casing 16.

It is observed that a further advantage of the device according to Fig. 2 resides in the fact that at least the weight 14 and the housing with the transponder 4 are suitable for reuse. When the animal is slaughtered and the bolus of Fig. 2 is retrieved, the tubular casing 16 can be removed. The weight 14 and the housing 2 can then be cleaned and disinfected. Subsequently, these parts can be assembled to form a new bolus by means of a new tubular casing 16. When the tubular casing 16 is made from, for instance, stainless steel, it is possible to reuse this part as well.

When the housing 2 with the transponder 4 is reused, it may, if so desired, be provided with a new visible sign, by means of the laser 12. If necessary, this may involve "crossing out" of the old, original sign. Such variants are each understood to fall within the framework of the invention.

The invention is by no means limited to the embodiments outlined hereinabove. For instance, the connecting means 16 may also be of net-shaped design. It is also conceivable that the weight 14 is directly mounted on the glass housing 2. The weight may be constructed from other metals or other heavy materials. It is important that the weight be properly resistant to gastric juices. It is also possible that the weight be manufactured from the same material as the housing 2. The housing 2 may be of wholly or partially transparent design. The transparent portions of the housing may be manufactured from glass or other materials. In this connection, one may for instance think of crystal and/or materials of a type marketed under the tradename of ULTEM.

It is also possible to provide, by means of the laser beam, the at least one sign on or in other parts of the contents of the housing, rather than on the filling material. In this respect, one may for instance think of the housing of the transponder itself. It is also possible that the device is provided with a label in advance (for instance in the form of a plastic or cardboard tag), which label is accommodated in the housing. This label can then be provided, by means of the laser beam generated outside the housing, with at least one sign visible from the outside of the housing.

Such variants are each understood to fall within the framework of the invention.

## Claims

1. A device for identification of an animal, the device being suitable for incorporation into, for instance, the stomach of the animal or subcutaneously in the animal, and the device comprising a housing which is at least partially of transparent design, a transponder accommodated in the housing and storing an identification code that can be read out by means of an electromagnetic field, and a filling material with which the housing is at least partially filled, the transponder being at least partially embedded in the filling material and the device further comprising at least one sign which is visibly provided, **characterized in that** a portion of the filling material which is visible through the housing is provided with the at least one sign, so that the at least one sign is visible from the outside of the housing.

2. A device according to claim 1, characterized in that the at least one sign is provided in or on the filling material by means of a laser beam through the housing.

3. A device according to claim 1 or 2, characterized in that the filling material comprises a cement-like material such as polyurethane, polyethylene, epoxy resin and/or PVC.

4. A device according to claim 1, 2 or 3, characterized in that the entire housing is of transparent design.

5. A device according to any one of the preceding claims, characterized in that the housing is manufactured from an inert transparent material such as glass.

6. A device according to any one of the preceding claims, characterized in that the at least one sign is related to the identification code.

7. A device according to any one of the preceding claims, characterized in that the device is designed as an implant.

8. A device according to any one of preceding claims 1-6, characterized in that the device is designed as a bolus.

9. A device according to claim 8, characterized in that the device further comprises a metal weight and connecting means which mechanically interconnect the housing and the weight.

10. A device according to claim 9, characterized in that the connecting means consist of a tubular casing accommodating the housing, the tubular casing having a free end thereof provided with an opening closed off by the weight.

11. A device according to claim 9, characterized in that the tubular casing and the weight are each of cylindrical design with the same diameter.

12. A device according to claim 9 or 10, characterized in that the tubular casing is manufactured from a synthetic material such as, for instance, plastic.

13. A device according to any one of preceding claims 9-11, characterized in that the tubular casing has its outer side provided with at least one visible sign.

14. A device according to claim 12, characterized in that the at least one sign is related to the identification code.

15. A device according to claim 12 or 13, characterized in that the at least one sign is formed by a relief in the outer side of the tubular casing.

16. A method for providing a sign on a device arranged for incorporation into an animal for identification of the animal, the device comprising a housing and a transponder accommodated in the housing, said transponder storing an identification code capable of being read out by means of an electromagnetic field, the housing being of at least partially transparent design, characterized in that the contents of the housing are provided, by means of a laser beam generated outside the housing, with at least one sign visible from the outside of the housing.

17. A method according to claim 16, the housing being at least partially filled with a filling material in which the transponder is at least partially embedded, characterized in that the at least one sign is provided in or on the filling material by means of the laser beam.

18. A method according to claim 16 or 17, characterized in that the at least one sign is related to the identification code.
